# EUROPÄISCHE PATENTANMELDUNG

(11) **EP 0 616 403 A1**
(43) Veröffentlichungstag der Anmeldung: **21.09.1994**
(21) Anmeldenummer: 94103372.2
(22) Anmeldetag: 05.03.1994
(51) Int. Cl.: H02G 3/04, H01R 25/16

(54) **Wandinstallationskanal**

(30) Priorität: 18.03.1993 DE 4308566
(71) Anmelder: Albert Ackermann GmbH & Co. KG, D-51643 Gummersbach (DE)
(72) Erfinder: Knier, Günther G., D-51647 Gummersbach (DE)
(74) Vertreter: Wilhelm, Hans-Herbert, Dr.-Ing.

(57) **Zusammenfassung**

2.1 Wandinstallationskanäle bekannter Art werden durch den Einbau von FI-Schutzschaltern oder Automaten in ihrem freien Querschnitt eingeengt, so daß die Verlegung von Kabelmaterial schwierig wird.

2.2 Es wird vorgeschlagen, die U-förmigen Grundprofile (1') von Wandkanälen durch eine Grundplatte (3) abzuschließen, die mit einer Befestigungsschiene für die FI-Schutzschalter oder Automaten versehen ist und diese Grundplatte (3) mit Seitenwänden, Endstücken und einer Abdeckfolie (18) zu einem Aufbaugehäuse (12) zu kombinieren, das die Schutzschalter (23) umgibt.

2.3 Verwendung für Wandinstalltionskanäle in Gebäuden.

## Beschreibung

Die Erfindung betrifft einen Wandinstallationskanal bestehend aus einem Grundprofil mit U-förmigem Querschnitt, das zum Einbau von elektrischen Installationsgeräten dient und an seiner offenen Seite durch eine Abdeckplatte abschließbar ist.

Wandinstallationskanäle dieser Art sind bekannt (DE-GM 76 40 797 bzw. Tehalit-Kundenzeitschrift "auf Draht" Nr. 19, März 1976, S. 161, 165-167). Bei diesen Bauarten, bei denen die Installationsgeräte an einer Schiene am Boden des Installationskanals befestigt werden, kann dann, wenn FI-Schutzschalter oder Automaten in diese Kanäle eingebaut werden, ein großer Teil des lichten Kanalquerschnittes für die Verlegung der übrigen Leitungen verbaut sein. Dies führt dazu, daß an diesen Engpässen die in den Wandkanälen längsverlegten Leitungen in an sich unerwünschter Weise in den vorhandenen Raum eingepreßt werden müssen.

Aus der FR-PS 1 565 658 ist es zwar bekannt, sogenannte Tischverteiler, die aus U-förmigen Profilen bestehen und stirnseitig durch Brandschutzwände auf eine bestimmte Länge festgelegt sind, mit Überstromsicherungsschaltern z.B. für die drei Phasen von Drehstrom zu versehen. Diese Überstromsicherungsschalter werden dabei mit Hilfe einer Befestigungsplatte, die auf der Oberkante des U-förmigen Tischverteilerprofils aufsitzt und mit Hilfe einer unter die nach innen weisenden Ränder des Schenkels des Tischverteilers greifenden Gegenplatte auf der Außenseite des Tischverteilers gehalten. Sie werden zusätzlich von einer Schutzhaube abgedeckt und zwar so, daß die jeweiligen Betätigungsschalter aus Fenstern an der Oberseite der Schutzhaube herausragen.

Bei solchen Tischverteilern bestimmter Länge, tritt das Problem des Zubauens des lichten Kanalquerschnittes für eine Vielzahl von in Installationskanälen verlegten Leitungen nicht auf, weil ohnehin nur eine beschränkte Anzahl von Steckdosen o.dgl. untereinander verdrahtet werden muß. Die dort vorgesehene Schutzhaube für die Überstromsicherungsschalter ist auch auf deren Abmessungen ausgelegt. Eine Lösung des oben angegebenen Problemes, insbesondere auch für den Fall, daß FI-Schutzschalter oder Automaten über größere Längenabschnitte des Kanalquerschnittes vorgesehen sein sollen, ergibt sich aus dieser Druckschrift nicht.

Der vorliegenden Erfindung liegt die Aufgabe zugrunde, einen Wandinstallationskanal der eingangs genannten Art so auszubilden, daß der Anbau auch von mehreren FI-Schutzschaltern oder Automaten keinen nachteiligen Einfluß auf den freien Querschnitt der Installationskanäle ausübt.

Zur Lösung dieser Aufgabe wird vorgeschlagen, als Abdeckplatte eine Grundplatte mit einer nach außen weisenden Befestigungsschiene für Schutzschalter oder Automaten vorzusehen, die als Befestigungsbasis für ein die Schutzschalter oder Automaten umgebendes Aufbaugehäuse dient, das aus zwei in ihrer Länge beliebig wählbaren Seitenwänden, zwei stirnseitig diese Seitenwände haltenden Endstücken und aus einer an den Endstücken und an den Seitenwänden gehaltenen, insbesondere durchsichtigen Abdeckfolie besteht.

Durch diese Ausgestaltung werden die FI-Schutzschalter oder Automaten aus dem Innenbereich des Grundprofiles des Wandinstallationskanales heraus nach außen verlegt und können wiederum nach außen durch das Aufbaugehäuse abgedeckt werden, das erfindungsgemäß einschließlich der Schutzschalter außen auf dem Wandinstallationskanal sitzt. Eine Beeinträchtigung des Innenraumes des Grundprofiles liegt daher nicht vor. Dabei ist gleichzeitig die einfache Möglichkeit gegeben, das Aufbaugehäuse mit beliebig langen Seitenwänden zu versehen und damit auch in der Länge an die vorgesehenen Geräte anzupassen. Die durchsichtige Abdeckfolie, die vorzugsweise auch noch leicht abhebbar ist, erlaubt auch im abgedeckten Zustand eine einfache Überprüfung der Schutzschalter oder Automaten und läßt nach dem Abnehmen auch eine Bedienung derselben zu, ohne daß etwa ein umständlicher Abbau des Aufbaugehäuses notwendig wäre. Trotz dieser Möglichkeit werden die Schutzschalter oder Automaten zuverlässig gegen jede unerwünschte oder unbeabsichtigte Berührung geschützt, was insbesondere dann wichtig ist, wenn z.B. Datenverarbeitungsgeräte mit Energie versorgt werden sollen, die bei Energieausfall unter Umständen wertvollen Datenbestand verlieren würden.

Vorteilhafte Weiterbildungen der Erfindung gehen aus den Unteransprüchen hervor. Die Merkmale des Anspruches 2 erlauben dabei eine relativ einfache Anbringung des Aufbaugehäuses nach dem Aufsetzen der Schutzschalter.

Nach den Ansprüchen 3 bis 6 sind einfache Befestigungsmöglichkeiten für die Grundplatte des Aufbaugehäuses gegeben. Die Ansprüche 7 bis 9 ermöglichen eine einfache und schnelle Befestigung des Aufbaugehäuses einschließlich des Zusammenfügens der Teile des Aufbaugehäuses. Die Ansprüche 10 und 11 schließlich sichern den Halt der Abdeckfolie am Aufbaugehäuse.

Die Erfindung ist anhand von Ausführungsbeispielen in der Zeichnung dargestellt und wird im folgenden erläutert. Es zeigen:
- Fig. 1: eine Explosionsdarstellung der für den Aufbau eines erfindungsgemäßen Wandinstallationskanales notwendigen Einzelteile,
- Fig. 2: ein Ausführungsbeispiel eines Aufbaugehäuses des erfindungsgemäßen Wandinstallationskanales,
- Fig. 3: eine vergrößerte Darstellung des Querschnittes des U-förmigen Grundprofiles des Wandinstallationskanales der Fig. 1 mit einer aufgesetzten Grundplatte und einer Spannklaue zur Befestigung derselben,
- Fig. 4: eine Darstellung ähnlich Fig. 3, jedoch bei Einsatz derselben Grundplatte und derselben Spannklaue nach Fig. 3 bei einem andersartig gestalteten Grundprofil für den Wandinstallationskanal,
- Fig. 5: einen Wandinstallationskanal gemäß Fig. 4 mit einem auf der Grundplatte befestigten FI-Schutzschalter oder Automaten in der Stellung, in der das Aufbaugehäuse gemäß Fig. 2 seitlich aufgesetzt wird,
- Fig. 6: die Darstellung ähnlich Fig. 5, jedoch mit dem befestigten Aufbaugehäuse,
- Fig. 7: den Wandinstallationskanal gemäß Fig. 6 mit einer teilweise und vollständig abgehobenen Abdeckfolie,
- Fig. 8: die vergrößerte Darstellung des Details VIII in Fig. 7,
- Fig. 9: die Teildarstellung des Schnittes durch die Ausführungsform der Fig. 6 längs der Schnittlinie IX-IX,
- Fig. 10: die Darstellung einer Variante eines Wandinstallationskanales ähnlich Fig. 1, jedoch mit einem Befestigungswinkel für die Grundplatte anstelle einer Spannklaue,
- Fig. 11: die Darstellung ähnlich Fig. 3, jedoch bei einer Befestigung der Grundplatte mit Hilfe des Befestigungswinkels, und
- Fig. 12: einen Längsschnitt ähnlich Fig. 3, jedoch bei einer Ausführungsform mit einem Befestigungswinkel nach den Figuren 10 und 11.

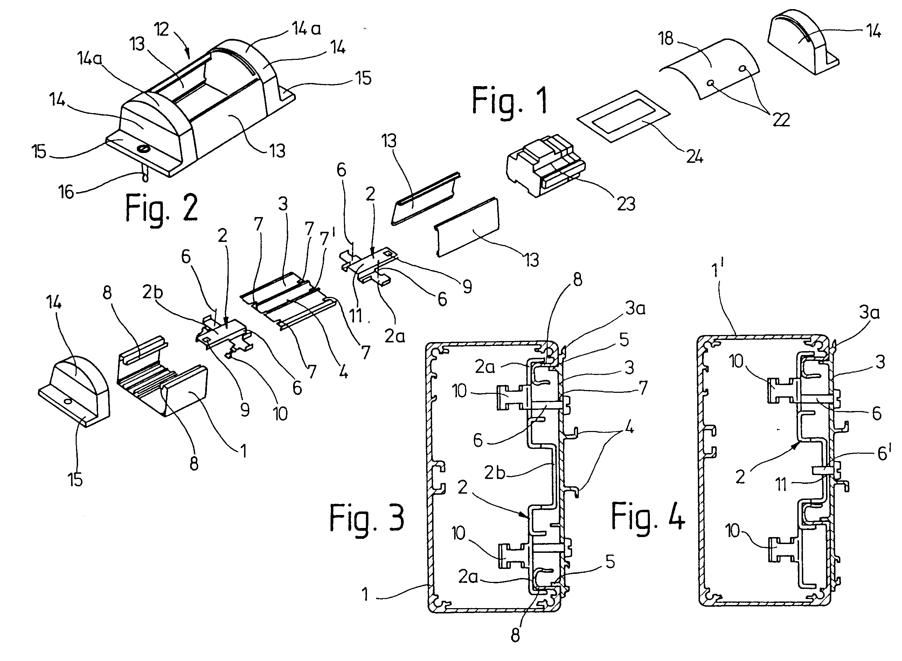

Aus den Figuren 1 bis 3 geht hervor, daß das dort gezeigte Ausführungsbeispiel eines erfindungsgemäßen Wandinstallationskanales aus einem Kanalgrundprofil (1) mit U-förmigem Querschnitt besteht und das in der Fig. 1 nur als kurzer Abschnitt gezeigt ist, aber von beliebiger Länge sein kann. Auf dieses Grundprofil (1) wird mit Hilfe einer Spannklaue (2) eine Grundplatte (3) aufgesetzt, die auf ihrer Außenseite mit einer genormten Befestigungsschiene (4) versehen ist. Die Grundplatte (3) ist dabei auf die beiden Außenränder des Grundprofiles aufgelegt und in ihrer Lage durch Distanznasen (5) gesichert, die in die Kanalöffnung eingreifen. An der Spannklaue bzw. an den Spannklauen (2) sind Schrauben (6) vormontiert. Diese Schrauben greifen in nach außen offene Langlöcher (7) der Grundplatte (3) und spannen auf diese Weise die Grundplatte (3) gegen das Grundprofil (1). Aus Fig. 1 und 3 ist zudem ersichtlich, daß die Spannklaue (2) mit zwei seitlichen Armen (2a) versehen ist, die unter nach innen gerichtete Abkantungen (8) des Grundprofiles (1) greifen, sowie mit einem länglichen Mittelteil (2b) das an einem Ende, das bei montierter Grundplatte (3) von dieser wegweist, mit einer rechteckigen Öffnung (9) versehen ist, auf deren Bedeutung noch eingegangen wird. Die Spannklaue (2) besitzt außerdem noch zwei Kabelbinderschellen (10), die in bekannter Weise zum Anbringen von im Innenraum des Grundprofiles (1) verlegten Kabeln dienen können. Alternativ kann die Spannklaue (2) mit zwei nach unten geneigten Laschen versehen sein, die zur Aufnahme von jeweils einer Zugentlastungsschelle für verlegte Kabel dienen können.

Die Fig. 4 zeigt, daß die Spannklaue (2) so ausgebildet ist, daß die Grundplatte (3), die natürlich ebenfalls in verschiedener Länge ausgebildet sein kann, auch auf ein Grundprofil (1') aufgesetzt werden kann, dessen freie Öffnung nach außen schmaler ist als jene des Profiles (1) der Figuren 1 und 3. In diesem Fall wird nur eine der Befestigungsschrauben (6) der Spannklaue (2) verwendet und zusätzlich eine auf dem Mittelteil (2b) noch vorgesehene Öffnung (11) zur Anordnung einer weiteren Befestigungsschraube (6') ausgenützt, die in ein nach außen offenes Langloch (7') der Grundplatte (3) eingreift, das der Schraube (6') zugeordnet ist. Die neue Anordnung läßt sich daher für zwei Grundprofilarten (1, 1') in gleicher Weise verwenden.

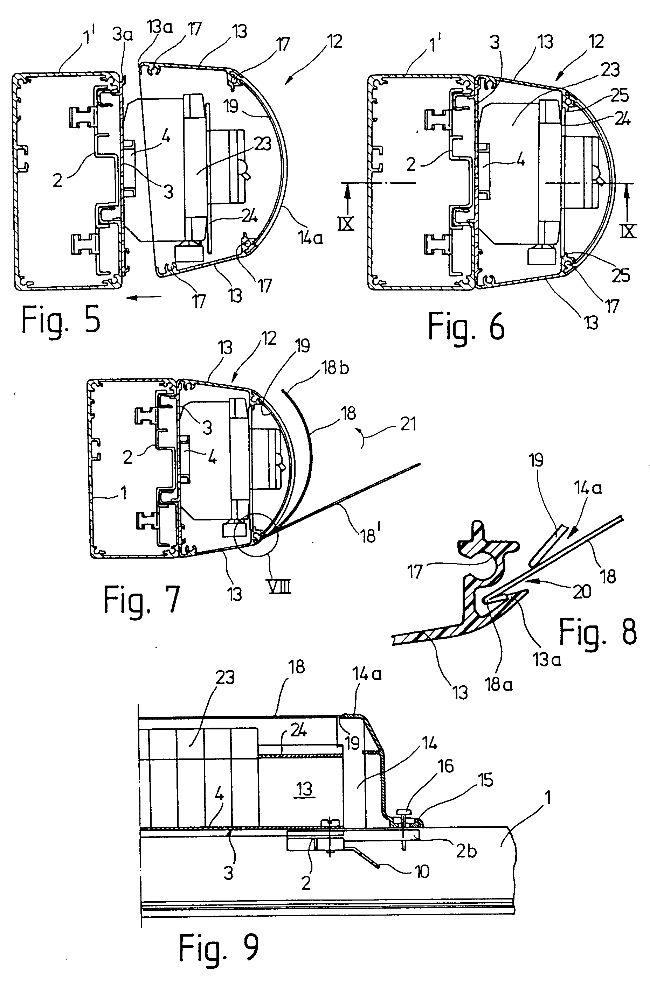

Aus den Figuren 1 und 2 geht weiter hervor, daß zu dem erfindungsgemäßen Wandinstallationskanal ein Aufbaugehäuse (12) gehört, das aus zwei Seitenwänden (13) und zwei Endstücken (14) besteht, die jeweils mit einem einseitig abragenden Sockelrand (15) versehen sind, in dem sich ein Schnellverschluß in der Form eines mit einem Schraubenkopf versehenen Verriegelungsstiftes (16) befindet. Dieser Verriegelungsstift greift, wie später noch anhand von Fig. 9 erläutert wird, in die Öffnung (9) der Spannklaue (2) ein.

Die beiden Endstücke (14) sind nach außen abgerundet ausgebildet und liegen stirnseitig an den Seitenwänden (13) an, mit denen sie durch Kerbnägel (Fig. 5) verbunden sind, die in durchlaufende Ösen (17) der Seitenwände (13) stirnseitig eingreifen. Die Endstücke (14) begrenzen daher mit ihrem bogenförmigen Abschluß (14a) eine Öffnung zwischen den Seitenwänden (13), die, wie im einzelnen auch aus den Figuren 7 und 8 erkennbar ist, von einer durchsichtigen biegsamen Abdeckfolie (18) sich an eine gebogene Rippe (19) an jeder der beiden Endstücke (14) anlegt, deren Kontur dem bogenförmigen Teil (14a) entspricht, und die mit ihren Enden (18a), die hakenförmig umgebogen sind, hinter eine Nase (13a) (Fig. 8) greift und sich dort verhakt, wenn sie aus der Position (18') der Fig. 7 in den Spalt (20) zwischen der Rippe (19) und dem Haken (13a) eingeführt wird. Die Abdeckfolie (18) kann dann im Sinn des Pfeiles (21) umgebogen und an der anderen Seite des Aufbaugehäuses (12) mit ihrem zweiten Ende (18b) eingeklemmt werden. Die Abdeckfolie kann im Bereich ihres Endes (18b) z.B. mit zwei Öffnungen (22) versehen werden. Sie läßt sich durch Eingriff in diese Öffnungen auch jederzeit wieder abnehmen.

Die Figuren 4, 5 und 6 zeigen überdies, daß die Grundplatte (3) an einem Ende eine Hinterschneidung (3a) besitzt, die einen durchlaufenden Rand bildet, hinter den die nach innen abgebogene Außenkante (13a) der Seitenwand (13) des Aufbaugehäuses (12) eingehängt werden kann, wenn das Aufbaugehäuse nach dem Befestigen des Schutzschalters (23) auf der Schiene (4) gemäß Fig. 5 aufgesetzt werden soll. Dem Schutzschalter (23) ist außerdem noch eine Abdeckplatte (24) mit einer rechteckigen Öffnung zugeordnet, die bei vollständig aufgesetztem Aufbaugehäuse (12) - Fig. 6 - von vorstehenden Rippen (25) an den Ösen (17) der Seitenwände (13) festgehalten wird. Der Schutzschalter (23) ist so, wie auch Fig. 9 deutlich werden läßt, außerhalb des Innenraumes des Grundprofiles (1) sicher montiert. Er läßt sich durch die Abdeckfolie (18) hindurch beobachten und bei Abnahme dieser Abdeckfolie auch bedienen. Es wird ersichtlich, daß je nach Länge der Grundplatte (3) auch mehrere Schutzschalter aufgesetzt werden können. Das Aufbaugehäuse (12) wird dann entsprechend lang gestaltet, was in einfacher Weise durch entsprechende Bemessung der Seitenwände (13) geschehen kann.

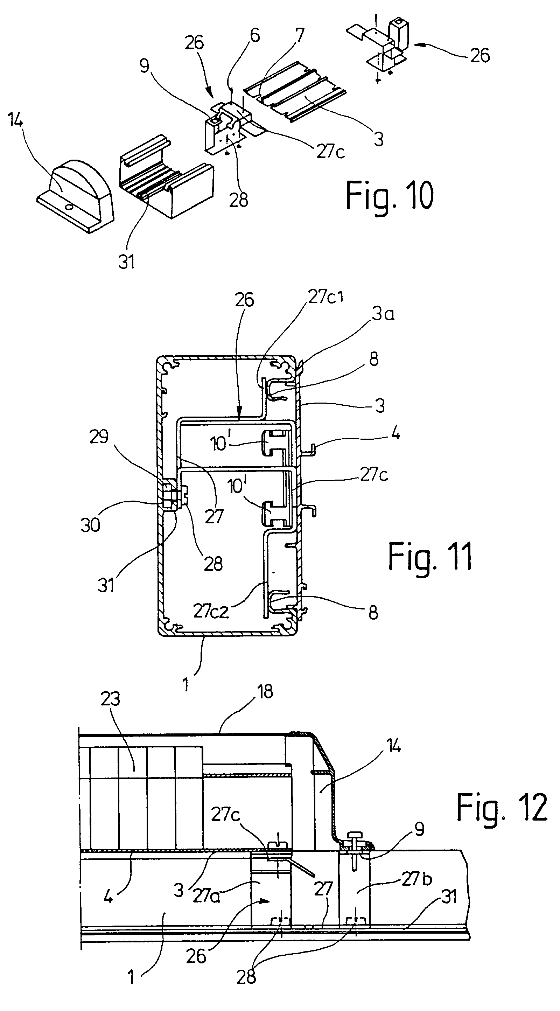

Die Figuren 10 bis 12 zeigen eine Variante für die Befestigungsmöglichkeit der Grundplatte (3). Diese Grundplatte (3) wird hier am Grundprofil (1) mit Hilfe eines Befestigungswinkels (26) angebracht, der mit einer Fußplatte (27) und einer daran angeordneten Schraube (28) und mit Hilfe eines Gleitsteines (29) in der Form einer Mutter an der sogenannten C-Schiene (31) des Grundprofiles (1) befestigt ist. Die Figuren 10 bis 12 zeigen dabei, daß der Befestigungswinkel (26) zwei rechtwinklig von der Grundplatte (27) abragende Stege (27a und 27b) besitzt, von denen der Steg (27b) oben mit einer Querplatte mit der rechteckigen Öffnung (9) und der Steg (27a) einen Querbügel (27c) mit zwei Flügeln und einem Mittelteil aufweist, der in etwa der Ausgestaltung des Mittelteiles der Spannklaue (2) entspricht, jedoch wesentlich kürzer ist. An diesem Mittelteil sind wiederum die Schrauben (6) vormontiert, die dann in die Langlöcher (7) der Grundplatte (3) eingreifen können. Auch der Befestigungswinkel (26) besitzt nach unten abstehende Kabelbinder (10') und die Flügelteile (27c1) und (27c2), die sich wieder von unten gegen die Abkantungen (8) stützen. Der Aufbau des Aufbaugehäuses, das in seinen Einzelteilen in den Figuren 10 und 11 nicht gezeigt ist, entspricht vollständig jenem der Figuren 1 und 2. Auch die Montage erfolgt in gleicher Weise.

## Patentansprüche

1. Wandinstallationskanal bestehend aus einem Grundprofil (1) mit U-förmigem Querschnitt, das zum Einbau von elektrischen Installationsgeräten dient und an seiner offenen Seite durch eine Abdeckplatte abschließbar ist, dadurch gekennzeichnet, daß als Abdeckplatte eine Grundplatte (3) mit einer nach außen weisenden Befestigungsschiene (4) für Schutzschalter (23) oder Automaten vorgesehen ist, die als Befestigungsbasis für ein die Schutzschalter oder Automaten umgebendes Aufbaugehäuse (12) dient, das aus zwei in ihrer Länge beliebig wählbaren Seitenwänden (13), zwei stirnseitig diese Seitenwände haltenden Endstücken (14) und einer an den Endstücken und an den Seitenwänden gehaltenen, insbesondere durchsichtigen Abdeckfolie (18) besteht.

2. Wandinstallationskanal nach Anspruch 1, dadurch gekennzeichnet, daß die Grundplatte (3) auf einer Längsseite mit einer Hinterschneidung (3a) zum Einhängen des Aufbaugehäuses (12) versehen ist.

3. Wandinstallationskanal nach Anspruch 1, dadurch gekennzeichnet, daß die Grundplatte (3) am Grundprofil (1, 1') durch eine Spannklaue (2) gehalten ist, die unter seitliche Begrenzungen (8) der offenen Seite des Grundprofiles (1, 1') greift.

4. Wandinstallationskanal nach Anspruch 3, dadurch gekennzeichnet, daß die Spannklaue (2) mit der Grundplatte (3) über Schrauben (6) verbunden ist.

5. Wandinstallationskanal nach Anspruch 4, dadurch gekennzeichnet, daß die Schrauben (6) in stirnseitig offene Langlöcher (7, 7') der Grundplatte (3) einführbar sind.

6. Wandinstallationskanal nach Anspruch 1, dadurch gekennzeichnet, daß die Grundplatte (3) am Grundprofil (1, 1') durch einen Befestigungswinkel (26) gehalten ist, der innerhalb des Grundprofiles (1,1') angebracht ist.

7. Wandinstallationskanal nach Anspruch 6, dadurch gekennzeichnet, daß der Befestigungswinkel (26) über Schrauben (6) mit der Grundplatte (3) verbunden ist.

8. Wandinstallationskanal nach Anspruch 7, dadurch gekennzeichnet, daß die Schrauben (6) in stirnseitig offene Langlöcher (7') der Grundplatte (3) eingreifen.

9. Wandinstallationskanal nach den Ansprüchen 1 und 2, dadurch gekennzeichnet, daß die Endstücke (14) mit den Seitenwänden (13) über Kerbnägel verbunden sind, die in stirnseitig offene Ösen (17) eingreifen, die Teil der Profile sind.

10. Wandinstallationskanal nach einem der Ansprüche 1, 3 oder 5, dadurch gekennzeichnet, daß die Endstücke (14) mit Schnellverschlüssen (16) zum Verriegeln an den Spannklauen (2) oder Befestigungswinkeln (26) versehen ist.

11. Wandinstallationskanal nach Anspruch 10, dadurch gekennzeichnet, daß die Schnellverschlüsse (16) in der Form von drehbaren Verriegelungsstiften (16) ausgebildet sind, die mit ihrem Riegelteil durch Öffnungen (9) in einen Teil der Spannklauen (2) bzw. der Befestigungswinkel (26) greifen.

12. Wandinstallationskanal nach einem der Ansprüche 1 bis 11, dadurch gekennzeichnet, daß die Endstücke (14) an ihrem Außenrand (14a) bogenförmig abgerundet sind und daß im Bereich dieses Außenrandes der Kontur des Außenrandes angepaßte Rippen (19) zur Anlage der Abdeckfolie (18) vorgesehen sind.

13. Wandinstallationskanal nach Anspruch 12, dadurch gekennzeichnet, daß die Abdeckfolie (18) mindestens an einem ihrer freien Enden mit hakenförmigen Abkantungen versehen sind, die sich hinter Nasen (13a) am Außenrand der Seitenwände (13) verhaken.

14. Wandinstallationskanal nach Anspruch 13, dadurch gekennzeichnet, daß zwischen dem einer Seitenwand zugewandten Ende der Anlagerippen (19) und den mit den Nasen (13a) versehenen Außenkanten der Seitenwände (13) ein Spalt (20) zum Einschieben der Abdeckfolie (18) verbleibt.
